# EUROPEAN PATENT APPLICATION

(11) **EP 4 295 982 A1**
(43) Date of publication of application: **27.12.2023**
(21) Application number: 23179359.7
(22) Date of filing: 14.06.2023
(51) Int. Cl.: B23H 9/00, B21J 15/50

(54) **ELECTRO-DISCHARGE MACHINING FOR REMOVING FASTENERS**

(30) Priority: 16.06.2022 GB 202208907
(71) Applicant: Scintam Engineering Ltd, Nottinghamshire NG5 5LZ (GB)
(72) Inventor: CATCH-POLE SMITH, Samuel, Nottinghamshire, NG5 5LZ (GB); SMITH, Peter Harry, Nottinghamshire, NG5 5LZ (GB)
(74) Representative: Barker Brettell LLP

(57) **Abstract**

A method is provided for removing a fastener (1) having a longitudinal shank from a workpiece (3) using electro-discharge machining, EDM, the method comprising: contacting a portion of the fastener (1) or workpiece (3) with an EDM fixture (100), thereby: locating the EDM fixture (100) and an EDM electrode (202) relative to the fastener (2) in a lateral direction; and establishing an electrical ground connection to the fastener (1) via the EDM fixture (202); and eroding the fastener (1) using the EDM electrode (202).

## Description

### FIELD OF THE INVENTION

The present invention relates to electro-discharge machining (EDM) methods and apparatuses.

### BACKGROUND

Electro-discharge machining (EDM) is a well-established method for machining in which electric arcs are used remove material. EDM is typically performed on a conducting workpiece (e.g. a metal workpiece). EDM uses a machining electrode (sometimes referred to as the EDM electrode, tool electrode, or simply 'the electrode') and a ground electrode, separated by a dielectric fluid. The ground electrode is typically the workpiece, which is contacted by a ground electrode (which may also be referred to as the workpiece electrode).

The machining electrode is brought into close proximity to the region of the workpiece that is to be machined. A high voltage is then applied between the machining and ground electrodes. The electric field increases until the dielectric fluid between the electrodes breaks down, resulting in an electric arc sparking between the electrodes. The electric arc vaporises material from the workpiece, and therefore can be used as a subtractive machining process. The electrical current supplied to the machining electrode is usually pulsed repeatedly and in quick succession, resulting in rapidly recurring sparks. Pulsing the current in this way controls heating of the workpiece by the arc, which may otherwise cause the metal component or surrounding surfaces to melt or the EDM apparatus to be damaged. The dielectric fluid may be circulated, both to remove workpiece fragments (which may otherwise at least partially bridge the gap between the EDM electrode and the workpiece) and to cool the workpiece and/or EDM electrode.

EDM can used for removal of fasteners and connecting elements from workpieces. For example, EDM may be used to remove rivets, a nut and bolt that has seized or been cross-threaded, or a screw whose head had been sheared or rounded off. Mechanical methods are not well suited for this purpose. Using a drill, for example, would require a user to drill through the head of the fastener. This may damage the surrounding workpiece surface. The drill may deflect at an angle (particularly in hard materials), the drill may slip off the head of the fastener, or excess heat or vibration may be produced.

EDM can be used to erode the fastener without exerting significant mechanical loads on the fastener (because the material removal process does not require contact), reducing the risk of damage.

For removing fasteners and connecting elements, it may be advantageous if the EDM apparatus is a compact handheld device rather than being floor or bench mounted. This enables the EDM apparatus to be used on work pieces that are large or immovable, or if the fastener is in a difficult to access area. For example, a compact handheld EDM apparatus could be used to remove rivets from an aircraft, a boat, or a fixed installation (e.g. plant equipment). However, there are a number of difficulties in enabling handheld EDM.

Firstly, it may be difficult to position the EDM apparatus correctly over the fastener. If the machining electrode is not centred over the fastener, the fastener may not be sufficiently eroded or damage may be caused to the workpiece. This is an inherent concern for handheld EDM, as the user must accurately manually position the apparatus over the fastener.

Secondly, it may be difficult to establish a ground contact with the fastener. The most basic solution is to use an external ground, wherein a grounding wire is clipped or otherwise contacted to the workpiece. However, there may not always be a suitable point to connect a ground wire. Some prior art devices (e.g. WO2012/103017, US7019245) use ground pins near to the EDM electrode. However, it may be difficult to ensure that the ground pins make adequate electrical contact, and such ground contact pins may impede the flow of dielectric fluid and make for a complex and crowded arrangement around the fastener.

A method and apparatus for EDM is desirable that addresses or mitigates at least some of these problems.

### SUMMARY

According to a first aspect of the invention, there is provided a method for removing a fastener having a longitudinal shank from a workpiece using electro-discharge machining, EDM, the method comprising:
contacting a portion of the fastener or workpiece with an EDM fixture, thereby:
   locating the EDM fixture and an EDM electrode relative to the fastener in a lateral direction ; and
   establishing an electrical ground connection to the fastener via the EDM fixture; and
eroding the fastener using the EDM electrode.

The method may further comprise receiving the portion of the fastener with a recess of the EDM fixture.

The portion of the workpiece that is contacted by the EDM fixture may comprise a sidewall of a workpiece hole in which the fastener is disposed.

The portion of the fastener may be a head of the fastener.

The method may comprise eroding the fastener until the longitudinal shank is weakened sufficiently that it can easily be broken (or breaks under a pre-existing fastener pre-load tension). The fastener may be eroded until the longitudinal shank is broken or separated from a head portion of the fastener.

Locating the EDM fixture and EDM electrode relative to the fastener in a lateral direction may mean that the EDM fixture and EDM electrode are centralised above the head and/or shank of the fastener. Thus, when the EDM electrode erodes the fastener, the EDM electrode erodes the centre of the head and/or shank of the fastener.

Contacting the portion of the fastener with the EDM electrode may comprise contacting a longitudinal sidewall of the fastener with a surface of the recess.

The surface of the recess may be a longitudinal sidewall of the recess. The longitudinal sidewall of the recess may be substantially parallel with the longitudinal sidewall of the fastener.

Contact may also be made between a top surface of the fastener and a surface of the recess. For example, when the portion of the fastener is received by the EDM fixture, a top surface the fastener (e.g. and end face of a fastener head) may abut a back surface of the recess opposite the opening, so that contact is made between the top surface of the fastener and the fixture. The recess of the EDM fixture may be configured to have a depth that corresponds to the height of the fastener portion (e.g. a fastener head) such that when contact is made between the top surface of the fastener and the back surface of the fixture, the end of the fixture may still sealably engage with the workpiece.

The method may further comprise establishing a workpiece seal between an end of the EDM fixture and the workpiece so that the recess and the workpiece together define a cavity.

The method may further comprise establishing an EDM electrode seal between the EDM electrode and the EDM fixture.

The method may further comprise circulating a dielectric fluid through the cavity through a fluid channel defined by the EDM fixture.

The fluid channel may comprise at least one opening in a longitudinal sidewall of the recess.

The step of eroding the fastener may be undertaken with the EDM electrode accessing the workpiece through an opening in the EDM fixture.

The portion of the fastener may be on a first side of the workpiece. The step of eroding the fastener may comprise eroding the fastener from a second, opposite, side of the workpiece.

According to a second aspect of the invention, there is provided an electro-discharge machining, EDM, tool for removing fasteners having a longitudinal shank from a workpiece, the EDM tool comprising:
an EDM electrode for eroding the fastener;
an EDM fixture configured to locate the EDM tool and the EDM electrode relative to the fastener in a lateral direction and to establish an electrical ground connection with the fastener.

The EDM fixture may comprise a recess for receiving a portion of the fastener and may be configured to establish a ground connection with the fastener by direct contact therewith.

The EDM electrode may be configured to erode the fastener from a first side of the workpiece. The EDM fixture may be configured to locate the EDM tool and the EDM electrode and make ground electrical contact with the fastener by contact with the workpiece and/or the fastener from a second side of the workpiece, opposite to the first side.

The recess of the EDM fixture may have an opening that is the same shape and size of the portion of the fastener. For example, head of the fastener and the recess may be hexagonal and the same dimensions. Alternatively, the recess may not be the same shape as the portion of the fastener, but still configured to engage with the fastener as described. By way of example, a rachet socket may not be hexagonal, but still able to engage a hexagonal bolt head (so long as the dimensions of the socket correspond to that of the bolt head).

The recess of the EDM fixture may have an opening that is configured to securely receive the portion of the fastener, such that there is no or substantially no lateral movement of the fixture relative to the received portion of the fastener. This may be used in applications where accurate location of the EDM electrode is required, for example when EDM tool is used on small fasteners or workpieces that are particularly fragile/sensitive.

Alternatively, the recess of the EDM fixture may have an opening that is configured to receive the portion of the fastener, enabling location and electrical contact as discussed above, but still allowing a substantial amount of lateral movement of the EDM fixture/tool relative to the fastener. For example, the opening may have a 'width' that corresponds to the size of the received portion of the fastener but a 'length' that is larger than the size of the fastener, such that the EDM fixture/tool can slide over the fastener. The EDM fixture may have a recess opening that is the same or a similar shape to the received portion of the fastener but is overall larger than the portion of the fastener. The user may have to laterally slide the tool so that contact is made between the fastener and the EDM fixture. This may be used in applications where location of the EDM electrode relative to the fastener does not have to be completely accurate. Allowing the EDM fixture to have some degree of lateral movement may allow for easier receiving of the portion of the fastener in the EDM fixture.

The recess of the EDM fixture may comprise a surface configured to make contact with a longitudinal sidewall of the fastener.

The EDM fixture may further comprise an opening configured to receive the EDM electrode so that the EDM electrode can erode the fastener.

The EDM fixture may comprise a workpiece seal, configured to seal against the workpiece so that the recess and the workpiece together define a cavity.

The EDM fixture may comprise a groove around a perimeter of the recess, the workpiece seal disposed in the groove.

The EDM fixture may comprise a fluid channel configured to communicate with the cavity for dielectric fluid circulation.

The fluid channel may comprise at least one opening in a longitudinal sidewall of the recess.

The EDM fixture may comprise an EDM electrode seal, configured to form a seal between the EDM fixture and the EDM electrode. The EDM electrode seal may be situated at the opening configured to receive the EDM electrode. The opening may comprise a groove around the perimeter of an inner surface of the opening, EDM electrode seal disposed in the groove.

The EDM fixture may comprise an electrically conducting body.

The EDM fixture may comprise an attachment mechanism configured to removably couple the EDM fixture to a body of the EDM tool. The attachment mechanism may comprise a threaded portion of the EDM fixture, for example.

The EDM tool may be a handheld EDM tool.

The EDM tool may comprise a power supply, configured to provide an electrical current to the EDM electrode and a fluid circulation unit, configured to circulate a dielectric fluid through the EDM tool, in use.

According to a third aspect of the invention, there is provide a system. The system comprises the EDM tool of the second aspect, wherein the EDM fixture is one of a set of EDM fixtures, each EDM fixture configured with a recess configured to correspond with a different shaped and/or sized fastener head.

According to a fourth aspect of the invention, there is provided an EDM fixture comprising a recess for receiving a portion of a fastener, wherein the recess is configured to locate the EDM fixture and an EDM electrode of an EDM tool relative to the fastener in a lateral direction and to establish an electrical ground connection with the fastener by contact therewith.

The EDM fixture of the fourth aspect may comprise any of the features of the EDM fixtures of the third aspect.

The EDM fixture may advantageously allow the fixture/tool to be aligned with fastener. The fixture may provide an easy and efficient way for the user to locate the tool on the fastener. Once the fixture is attached to an EDM tool, the user may simply align the recess of the fixture so that the fastener is received by the fixture. As the recess of the fixture is configured to receive said fastener, the fixture necessarily ensures that the tool is aligned with the centre of the fastener. Thus, the tip of the EDM electrode is correctly located over the fastener. This may allow for efficient removal of the fastener and may reduce the likelihood of damaging the surrounding workpiece surface. Without such a fixture, the user may have to approximate or 'eyeball' placement of the EDM tool over the fastener, or otherwise perform more complicated measurements/calibration to ensure that the tool is correctly centred.

The fixture may prevent or reduce damage to a hole in which the fixture is situated. The fixture may ensure that the EDM electrode is located above the centre of the fixture and parallel to the shank of the fixture. The hole in which the fixture is received may be screw threaded or otherwise configured for engaging the fastener, for example. Thus, the fixture may allow the same hole to be used with a new fastener once the existing fastener is removed using EDM.

The fixture may also provide a simple and effective way of grounding the fastener. The fastener must be grounded in order to function as the grounding electrode for the EDM process. The EDM spark shall take the shortest path between the EDM electrode and workpiece. Traditionally, a grounding cable would be attached to the fastener. The grounding cable may be attached to, for example, the back of the fastener or connected to the surface in which the fastener is fixed (provided there is electrical continuity between the fastener and the surface). However, this may not be possible in all cases. The user may not have practical access to the rear side of the fastener, or the surface may not be conductive so cannot be used for grounding, for example.

At least part of the fixture is conductive so that a grounding path is formed via the fixture. The fixture makes electrical contact with the fastener. As such, grounding is enabled simply by the fastener being received by the fixture. This may provide a simple way to ground the fastener, while also ensuring that the grounding connection is secure. As electrical contact is made between the fastener and the fixture recess, the fixture may be used to ground fasteners that are attached to non-conductive surfaces.

Although generally referred to as a `fastener', the present invention may be applied to a variety of fastening devices. These could be screw inserts, nuts, washers, female threads, studs, rivets, flanges, or objects with multiple fasteners. Equally, the present invention may be applied to devices that are not fasteners. The present invention may be applied to gears/splines, shafts or bearings. In a similar manner to that discussed above, the fixture may be configured to engage, for example, a shaft such that the fixture is located on and electrically coupled to the shaft, thereby enabling EDM erosion of the shaft. This may be used to remove bearings or gears that have seized up, for example.

### DETAILED DESCRIPTION

Embodiments of the invention will be described, purely by way of example, with reference to the accompanying drawings, in which:
Figure 1 shows a schematic cross-sectional view of an EDM fixture coupled to an EDM tool and engaging a fastener;
Figure 2 shows an example EDM fixture;
Figure 3 shows a schematic isometric view of an EDM fixture coupled to a handheld EDM tool;
Figure 4 shows a schematic front view of the EDM fixture and handheld EDM tool of Figure 3;
Figure 5 shows a schematic cross-sectional view of the EDM fixture and handheld EDM tool of Figure 3;
Figure 6 shows a schematic cross-sectional view of the EDM fixture and handheld EDM tool of Figure 3 engaging a fastener;
Figure 7 shows a schematic side view of an alternative EDM fixture coupled to a handheld EDM tool;
Figure 8 shows a schematic cross-sectional view of the EDM fixture and handheld EDM tool of Figure 7 engaging a fastener;
Figure 9 shows a schematic of a variation on the alternative EDM fixture of Figure 7;
Figure 10 shows a schematic cross-sectional side view of an alternative EDM fixture engaging a fastener;
Figure 11 shows a schematic bottom view of the EDM fixture of Figure 10;
Figure 12 shows an example EDM apparatus; and
Figure 13 shows a flow diagram illustrating an example method for removing a fastener using EDM.

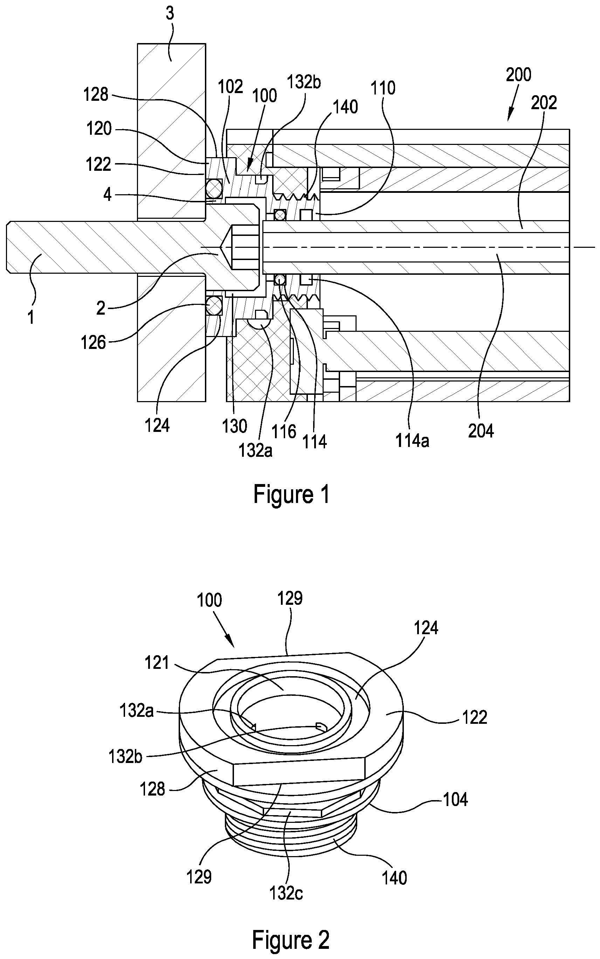

Referring to Figure 1, a cross section of an example EDM fixture 100 and EDM tool 200 are shown in schematic view. The EDM fixture 100 is shown receiving a head 2 of a fastener 1 that is protruding from a workpiece 3.

The EDM fixture 100 comprises a generally tubular body 102 with a first end 110 and a second end 120. The EDM fixture 100 is generally tubular in that it is a substantially hollow cylinder, with an opening at each of the first end 110 and the second end 120.

The first end 110 is configured to attach to the EDM tool 200. The first end 110 comprises an attachment means 140 configured to engage with a receiving portion of the EDM tool 200 such that the fixture 100 is securely yet removably attachable to the EDM tool 200. As shown in Figure 1, the attachment means 140 may be a threaded portion, so that the fixture 100 can be screwed into a corresponding threaded receiving portion of the EDM tool 200. Alternatively, the attachment means 140 may be any suitable attachment means, such as a bayonet type connector, fixed or retractable protrusions, or a surface that is retained in the receiving portion of the EDM tool by friction, for example.

The second end 120 comprises a recess configured to receive the head 2 of the fastener 1. The recess of the second end may have a shape and dimensions that correspond with those of the fastener head 2 (e.g. in the same way a socket wrench has a shape that corresponds with a nut). The recess is sufficiently deep so that when the fastener head 2 is received, an end face 122 of the second end 120 is substantially in contact with the surface 3 from which the fastener head 2 protrudes.

By being configured to receive the fastener head 2 in this way, the fixture 100 ensures that the EDM tool 200 is correctly located over the fastener 1. A user operating the tool 200 is able to position the fixture 100 over the fastener 1, before making any necessary adjustments in the position of the tool such that the fastener head 2 is received by the fixture recess. When the fastener head 2 is received in the recess, the longitudinal axis z of the EDM electrode 202 is correctly centred with respect to the fastener head 2.

Additionally, when the fastener head 2 is received in the fixture 100, electrical contact is made between the fixture 100 and the fastener head 2. As shown in Figure 1, a side wall of the fixture recess makes contact with at least part of the side wall 4 of the protruding fastener head 2 when the fastener head 2 is received therein. The first end 110, body 102 and second end 120 of the fixture 100 are all at least partially conductive, such that the fastener 1 is electrically coupled to the EDM tool 200. The EDM tool 200 will be grounded (for example via a grounding wire in a power supply cable). The fixture 100 therefore ensures that the fastener 1 is electrically connected to ground, such that the fastener 1 can act as the grounding electrode for the EDM process. Electrical contact may be made between the fixture 100 and the tool 200 via the attachment means 140.

The fixture 100 may additionally make electrical contact with the workpiece 3 surrounding the fastener head 2. For example, a portion of the end face 122 may contact the surface of the workpiece 3 immediately around the fastener head 2. The workpiece will typically comprise metal, at least in a region sleeving the fastener 1.

Although the fixture 100 is electrically coupled to the body of the EDM tool 100, there is no direct electrical contract between the fixture 100 and the EDM electrode 202. Electrical coupling between the fixture 100 and the EDM electrode 202 may result in a short between the EDM electrode and ground electrode, such that no EDM spark is produced. The first end 110 of the fixture 100 may comprise insulation on the surface of the opening. The EDM electrode seal 116 may also prevent contact between conductive areas of the first end 110 and the EDM electrode 202.

As discussed above, in order to form a grounding electrode, the fixture 100 must provide an electrical pathway between the fastener head 2 and the EDM tool 200. The fixture may be made substantially of metal. The majority of at least the body 102, second end 120 and first end 110 may be conductive. Insulation may be provided at the first end 110 to prevent shorting between the EDM electrode 202 and the fixture 100.

Insulation may consist of distinct, non-conductive components. For example, a non-conductive 'bumper' may be fitted around the outermost surface 128, or part of the second end 120 itself may be made from non-conductive material. Alternatively, insulation may consist of an insulating coating that is applied to required surfaces of the fixture 100. For example, an insulating coating may be applied to the inner surface of the first end 110 to prevent electrical contact between the fixture 100 and the EDM electrode 202.

The first end 110 further comprises an opening configured to receive a EDM electrode 202 of the EDM tool 200 when the fixture 100 is coupled to the tool 200. The inner surface of the EDM electrode opening comprises a groove 114 configured to seat An EDM electrode seal 116. The EDM electrode seal 116 may be an o-ring and is configured to seal around the EDM electrode 202 of the EDM tool 200 when the fixture 100 is coupled to the tool 200. The first end 110 may comprise at least one additional groove 114a configured to seat a further seal in order to adequately form a liquid tight seal around the EDM electrode 202.

The second end 120 further comprises a groove 124 configured to seat a workpiece seal 126. The groove 124 may be circular and run around a perimeter of the opening of the recess. The workpiece seal 126 may be an o-ring, such that when the end face 122 of the second end 120 is pressed against the surface 3, a seal is formed around the opening of the recess of the second end.

When the EDM electrode 202 is received by the first end 110 and the fastener head 2 is received by the second end 120, a cavity 130 that at least partially surrounds the received fastener head 2 is formed within the body 102 of the fixture 100 (the cavity 130 in communication with an interior of the tubular EDM electrode 202. The EDM electrode seal 116 and workpiece seal 126 ensure that the cavity 130 is sealed.

Once the sealed cavity 130 is formed, the cavity 130 may be filled with dielectric fluid. As shown in Figure 1, the EDM electrode 202 may be a hollow tube-like structure, with dielectric fluid supplied to the cavity 130 from the EDM tool 200 via a pathway 204 along the length of the EDM electrode 202. Alternatively, the fixture body 102 may have inlets, through which dielectric fluid can be supplied to the cavity 130.

The fixture body 102 may also comprise one or more outlets 132a,b for draining dielectric fluid from the cavity 130. The outlets 132a,b may drain fluid from fixture 100 into a gallery of the EDM tool 200, where it can recirculated to a pump (e.g. via a filter).

During the EDM process, dielectric fluid may be continually circulated through the cavity 130, such that the cavity 130 is regularly flushed of any waste material generated by the EDM process.

Referring to Figure 2, an example EDM fixture 100 is shown. The fixture 100 comprises a recess 121 in the second end configured to receive a fastener, as shown in Figure 1. In this example, the recess 121 is circular, but the recess 121 can be configured to be a different shape and/or size so that the recess 121 corresponds with the fastener. When the fastener is received by the recess 121, the inner sidewall that defines the recess makes electrical contact with at least a portion of the sidewall of the fastener.

The end face 122 of the second end comprises a groove 124, the groove circumferential to and surrounding the opening of the recess 121. The groove is configured to seat a workpiece seal (not shown), for example an o-ring. The end face 122 is otherwise substantially flat, such that when the fastener is received in the recess 121 and the fixture 100 is pressed against the workpiece surface in which the fastener is disposed, the end face 122 and seal form a fluid tight seal against the surface.

The outermost surface 128 of the second end of the fixture comprises two parallel flat faces 129. Faces 129 on the outermost surface 128 may provide surfaces for a tool to engage with (e.g. a spanner), which may make it easier for the user to attach the fixture 100 to an EDM tool. In this example, there are two faces 129 that are parallel and opposite to one another, but one can appreciate that the second end of the fixture may have alternative configurations of gripping surfaces. More than two surfaces for engagement with a tool, or for gripping, may be made. For example, the second end may be, for example, hexagonal. Alternatively, protrusions or textured areas may be provided for the user's hand to grip.

The first end of the fixture comprises a screw thread 140 for attaching the fixture to an EDM tool. As discussed in relation to Figure 1, alternative attachment means may be provided (e.g. a cam lock or bayonet fitting).

The body of the fixture comprises a flange 104 that protrudes around the exterior of the fixture. The flange 104 may enable the fixture 100 to be more easily or securely attached to the EDM tool. For example, this flange may abut a surface of the EDM tool once the fixture 100 has been fully screwed in. The flange may also provide a seal for fluid drained from the fixture 100. The fixture 100 comprises a plurality of outlets 132a-c for draining dielectric fluid from a volume surrounding the received fastener head. The outlets 132a-c may comprise holes that pass radially through the side wall of the recess, from the cavity volume around the received fastener head to a gallery within the EDM tool, from where further a fluid conduit can drain this fluid from the tool. Outlets 132a and 132b can be seen on the interior of the fixture 100, while outlet 132c can be seen on the exterior of the fixture 100, above the flange 104. The flange 104 may provide a fluid tight barrier (e.g. by compressing a flexible washer between the flange 104 and the EDM tool body) when the fixture is attached to the EDM tool, preventing fluid from escaping (in a distal direction) where the outlets 132a and 132b communicate with the fluid gallery of the EDM tool. The threaded region 140 may provide a further seal preventing leakage in a proximal direction (e.g. towards the EDM tool interior). This may prevent the fluid from leaking or going into the interior of the tool and may prevent dielectric fluid from obstructing electrical contact between the first end of the fixture and the tool.

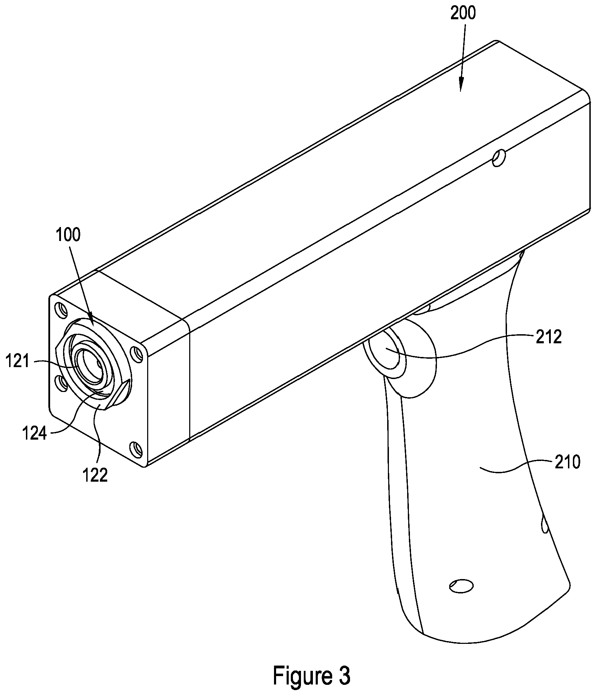

Referring to Figure 3, a diagram of an example EDM fixture 100 and EDM tool 200 is shown. As described previously, the fixture 100 is attached to the EDM tool 200, such that the second end of the fixture 100 protrudes from the tool 200.

In this example, the EDM tool 200 is a 'gun' style handheld tool. The tool 200 comprises a handle 210, which the user can grip, and a button or trigger 212. The button 212 may be actuated by the user to commence EDM erosion of the fastener. A sequence of events may be triggered by depressing the trigger 212: first a suction pump may be triggered, to produce a negative pressure within the chamber (defined by engagement of the fixture with the workpiece); after a delay time, a supply pump may start supplying dielectric fluid to the chamber; after a further delay time, a voltage difference may be applied between the EDM electrode and the fixture/ground electrode, and the EDM electrode advanced until a spark is initiated. Once the spark is initiated, the EDM electrode may be automatically advanced to keep pace with erosion of the workpiece, based on the discharge current. A controller may be provided, configured to control the EDM tool to perform these steps.

The user may manually move the tool 200 so that the recess 121 of the fixture 100 is aligned with the head of a fastener to be removed. The user may move the tool 200 laterally relative to the surface in which the fastener is secured, or rotate the tool 200, such that the recess 121 receives the fastener. Once the fastener is received in the recess, the user can push the tool 200 and fixture 100 towards the fastener, such that the end face 122 and a seal in groove 124 sealably engage with the surface.

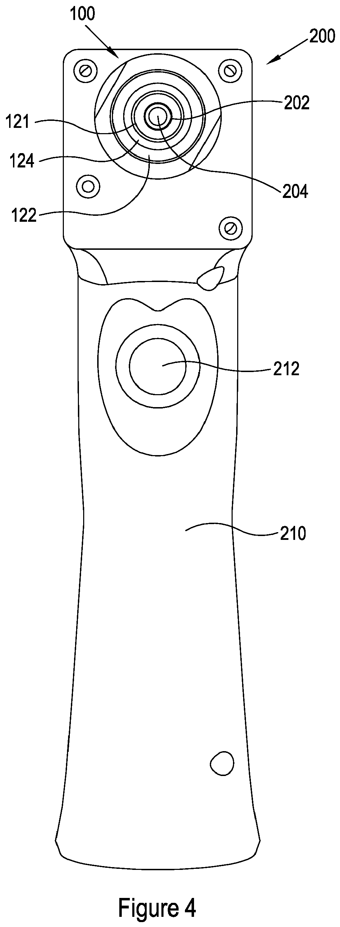

Referring to Figure 4, a front view of the fixture 100 and tool 200 of Figure 3 is shown. The EDM electrode 202 of the tool 200 is visible within the recess 121 of the fixture. The EDM electrode 202 is a hollow tube-like structure, with a central, coaxial pathway 204 provided for supplying dielectric fluid into the fixture during the EDM process.

The EDM electrode 202 is centrally located relative to the recess 121 of the fixture. This ensures that once the fastener is received by the opening, the EDM electrode 202 is correctly centred above the fastener. As such, positioning the EDM electrode 202 is as simple as the user aligning the tool 200 such that the recess 121 receives the fastener.

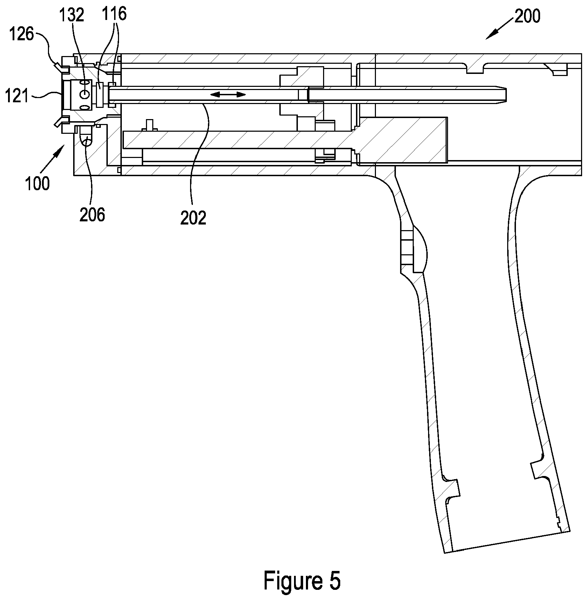

Referring to Figure 5, a cross section of an example EDM fixture 100 and EDM tool 200 are shown in schematic view. For clarity, not all of the features are labelled, but the fixture 100 and tool 200 may comprise the features discussed with reference to the previous figures. The seal 126 in this embodiment is a flap type seal, rather than the o-ring depicted in Figure 1.

The recess 121 of the fixture 100 is configured to receive a fastener head. Once the fastener is received, the workpiece seal 126 on the end face of the fixture sealably engages with the surface in which the fastener is disposed.

Prior to operation, the EDM electrode 202 of the tool 200 may be in a retracted position, wherein the tip of the EDM electrode 202 is not received by, or is only partially received by, the fixture 100. The retracted position may reduce the likelihood of damaging the electrode while the tool 200 is being repositioned to another fastener, for example. During operation (i.e. after a head has been received by the fixture 100), the EDM electrode 202 is moved along its length to a working position, wherein the tip of the EDM electrode 202 is in close proximity to the fastener head. When moving from the retracted position to the extended position, the EDM electrode passes through the at least one electrode seal 116, the seal(s) 116 forming a fluid tight seal around the EDM electrode 202. The EDM electrode 202 may be moved by, for example, a motor, actuator or piston.

The tool 200 comprises a fluid gallery 206. Dielectric fluid may be drained from the fixture 100 via the one or more outlets 132. The fluid gallery 206 may be connected via a pipe or conduit to a fluid pump, configured to circulate dielectric fluid through the fixture 100 during the EDM process.

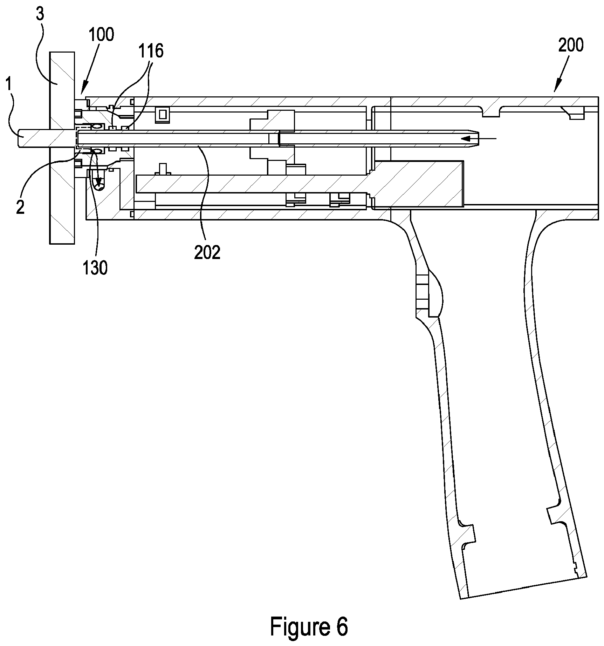

Referring to Figure 6, a cross section of the fixture 100 and the tool 200 of Figure 5 are shown in schematic view engaging a fastener 1. The fixture has been positioned such that a fastener head 2 is received by the fixture 100. With the fastener head being received by the fixture 100, the end face of the fixture is in contact with the surface 3 surrounding the fastener head 2. The EDM electrode 202 is moved to the working position such that the tip of the EDM electrode is in close proximity to the fastener head 2.

Due to the workpiece seal sealably engaging with the surface 3 and the seals 116 at the first end sealing around the EDM electrode 202, the cavity 130 within the fixture 100 is fully enclosed and sealed. During the EDM process, the cavity 130 is filled with dielectric fluid. Dielectric fluid can be supplied to the cavity 130 coaxially through the EDM electrode 202 and drained via outlets in the fixture 100.

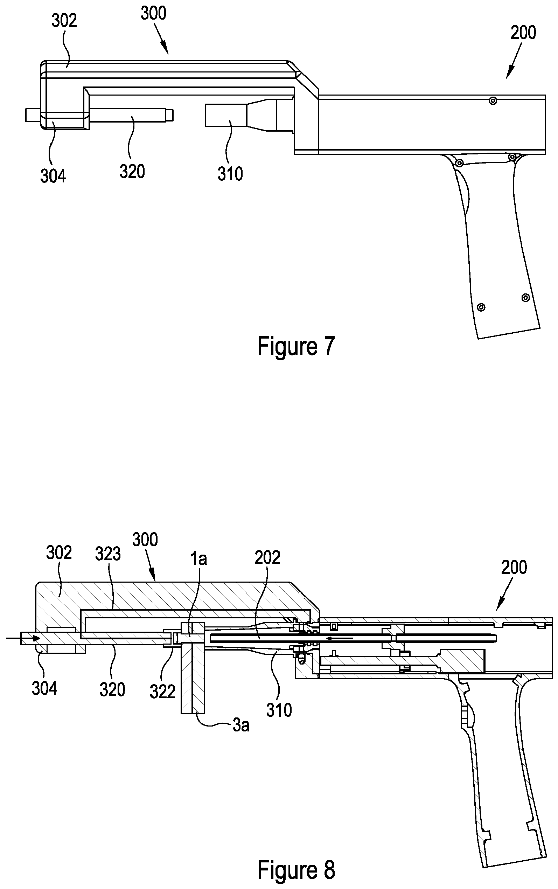

Referring to Figure 7, an example EDM fixture 300 and EDM tool 200 are shown. The fixture 300 comprises a first portion 310 within which the EDM process occurs (i.e. the first portion 310 engages with the workpiece to form a sealed cavity which is filled with dielectric fluid and the EDM electrode is brought into close proximity to a front side of a fastener within the cavity, as described with reference to other embodiments)

However, unlike in previous examples, alignment of the fixture/tool and grounding of the fastener is achieved via a second portion 320 of the EDM fixture on the rear side of the fastener (opposite to the side that is machined by the EDM electrode). The fixture 300 comprises a U-shaped arm 302 connecting the first portion 310 and second portion 320. The U-shaped arm 302 allows the fixture 300 to be placed over the edge of a flange or a surface, such that the first portion 310 and second portion 320 can engage with front and rear sides of the fastener respectively. The second portion 320 comprises a protrusion that is coaxial with the EDM electrode but configured to be positioned on the other side of the workpiece. In this case the second portion 320 comprises a cylindrical element that can be moved towards and away from the workpiece and clamped in position by the fixture 300.

The fixture 300 may be suitable for removing fasteners that do not have a protruding head (for example rivets that are flush with the surface or bolts/screws whose heads have been sheared off). In such instances, it is difficult to align or make electrical contact with the fastener using fixtures configured to receive a fastener head. Instead, the second portion 320 is configured to engage with the fastener on the rear side.

The distance between the first 310 and second 320 portions can be adjusted by moving the second portion 320 through arm bracket 304. This may allow the fixture 300 to be used on workpieces of various thickness and fasteners of various lengths. The bracket 304 may apply a lengthwise force to the second portion 302 such that the fastener 1a and surface 3a are clasped between the first 310 and second portion 320. The bracket 304 may comprise, for example, a spring actuated mechanism or a screw thread, that enables the second portion 320 to be moved through bracket 304.

Referring to Figure 8, a cross section of the fixture 300 and EDM tool 200 of Figure 7 is shown. In this example, the fixture 300 is coupled to a broken fastener 1a. The front side of the fastener is flush with the surface 3a. The fastener 1a protrudes from the rear of the surface 3a, but has been broken off at least partially.

The second portion 320 comprises a cup 322. The cup 322 has a recess that is configured to receive at least part of the rear side of the fastener 1a. The cup recess may have a shape and dimensions that correspond to the shape and dimensions of the fastener. The second portion 320 and cup 322 ensure that when the fastener is received by the cup, the fixture and tool are aligned with the fastener. The EDM electrode 202 may then be extended to a working position proximate to the front side of the fastener 1a, and is correctly centred over the fastener 1a.

The cup 322 also makes contact with at least part of the fastener 1a. The inner surface of the cup may contact at least part of a side wall of the fastener, for example. The cup 322, second portion 320, arm bracket 304 and arm 302 and first portion 310 may be comprise conductive material, such that the fastener is in electrical contact with the EDM tool 200. For example, a conducting wire or pathway may be embedded in the second portion of the fixture, connecting the cup 322 to a contact or electrode within the EDM tool 200. As discussed previously, this ensures that when the fastener 1a is received by the fixture 300, the fastener 1a is grounded via the fixture 300, thus forming the grounding electrode for the EDM process.

Aside from the locating and grounding functions now being enabled by the second portion 320 on the rear of the fastener 1a, the first portion 310 may comprise similar features and functionality as the fixture of Figure 1, for example. The first portion 310 may comprise a workpiece seal to be sealable engaged with the surface 3a around the fastener 1a, and an EDM electrode seal configured to receive the EDM electrode 202. These together enable a sealed cavity to be formed within the first portion 310. The cavity can be filled with dielectric fluid, thereby enabling an EDM arc to be formed between the machine electrode 202 and the fastener 1a.

The first portion 310 may further comprise fluid outlets for draining fluid from the cavity. Dielectric fluid may be supplied to the cavity through the EDM electrode, as discussed previously. The first portion may further comprise an attaching means for removably attaching the fixture 300 to the tool 200, such as a threaded screw portion that is received by a corresponding receiving portion of the tool 200.

Alternatively, the second portion 320 may comprise a pin or protrusion instead of cup 322. The tip of the protrusion may be configured to be received by a hole (i.e. the protrusion may have the same shape and/or dimensions of the hole), in which the rear side of the fastener is situated. This may allow the fixture 300 to be used for fasteners that have broken off within the surface 3a, so that there is no protruding portion.

When the tip of the protrusion is received by the hole, the fixture is correctly centred over the fastener. The tip of the protrusion also makes electrical contact with at least part of the rear side of the fastener, thereby grounding the fastener.

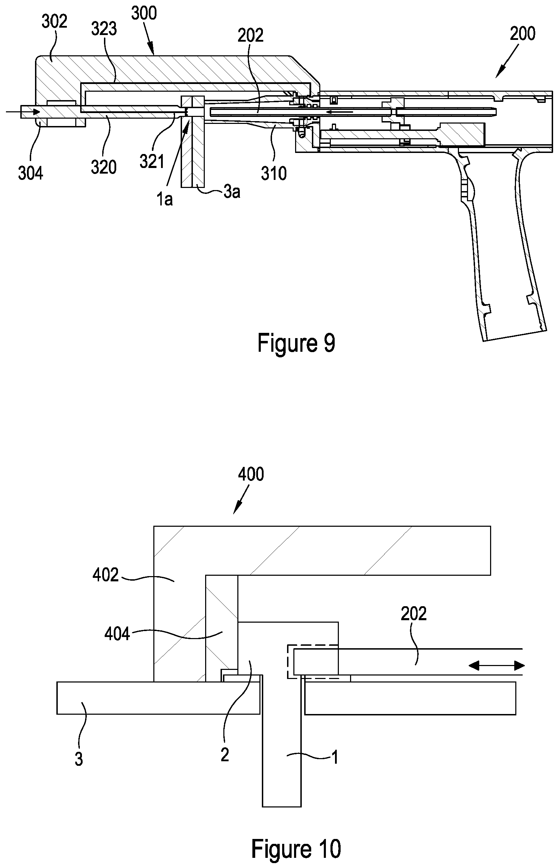

Figure 9 shows a variation on the embodiment of Figure 8, in which a cross section of the fixture 300 and EDM tool 200 similar to that shown in Figure 7 is shown. In this example, the fixture is coupled to a workpiece hole within which is disposed a broken fastener 1a. The workpiece hole is sleeved with a conducting material (e.g. a metal) for receiving the fastener.

The EDM fixture 300 in this example shares the features of the EDM fixture described with reference to Figures 7 and 8, but does not include a cup 322 for engagement with a protruding portion of a fastener, and instead has a second portion 320 that is configured to be received in the workpiece hole. For example, the second portion may comprise relatively slender end portion 321 which is received in the hole, and which makes electrical contact with a sidewall thereof. Since the fastener is engaged with the hole, electrical contact with a sidewall of the hole results in electrical contact with the fastener portion. In some embodiments, the end portion 321 may be tapered. In some embodiments, the end portion 321 may be configured to make direct electrical contact with the fastener from the back side. An embedded conductor 323 may be provided for electrically connecting the end portion 321 to a ground connection in the EDM tool 200.

Referring to Figure 10, a cross section of an example fixture 400 is shown in schematic view. The fixture enables a EDM electrode 202 to be brought into close proximity with a fastener head 2 from the side. EDM can then be used to erode the fastener head 2 such that the fastener 1 can be removed from the surface 3.

The fixture 400 comprises a body 402. The body 402 may comprise a seal that is configured to engage with the surface, so that the body 402 can be filled with circulating dielectric fluid. The body 402 may also comprise attachment means configured for removably attaching the fixture 400 to an EDM tool.

The fixture 400 comprises a conductive insert 404. The insert 404 is configured to at least partially receive the fastener head 2, and in doing so ensures that the fixture 400 and tool are correctly positioned relative to the fastener for EDM. The insert may have an inner shape and/or dimensions that are configured to receive (and/or correspond with) the fastener head. The insert 404 is conductive and makes electrical contact with at least part of the fastener head 2, such that when the fastener head 2 is received by the insert 404, it is grounded via the fixture.

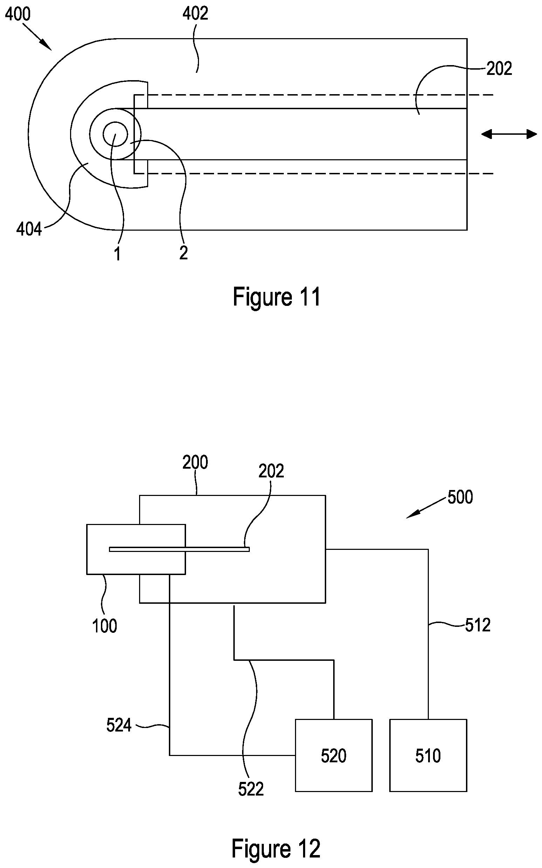

Referring to Figure 11, the fixture 400 of Figure 10 is shown from the bottom in schematic view. As described above, the EDM electrode 202 erodes the fastener head 2 from the side.

The insert 402 is configured to surround the fastener head 2 on three sides, with the EDM electrode 202 being brought into close proximity with the fastener head from the fourth side. The insert 402 makes contact with the side wall of the fastener head 2.

Referring to Figure 11, a block diagram of an EDM apparatus 500 is shown. Apparatus 500 comprises an EDM fixture 100, configured to receive a fastener head. The apparatus 500 further comprises an EDM tool 200, comprising an EDM electrode 202, to which the fixture 100 is removably attached.

The EDM apparatus 500 may comprise a plurality of fixtures, wherein each fixture 100 has a different size/shape of recess configured to receive a different size/shape of fastener. Fixtures can be chosen and attached to the EDM tool 200 depending on the corresponding fastener to be removed.

The apparatus 500 further comprises a power supply unit 510. The power supply unit 510 is configured to supply an EDM current to the EDM tool 200 via cable 512, thereby enabling EDM. The power supply 510 may further comprises user operated controls for controlling voltage or current, for example.

The apparatus 500 further comprises a fluid pumping unit 520. The fluid pumping unit 520 is configured to supply dielectric fluid to the tool/fixture via supply conduit 522. Fluid is drained from the fixture 100 via return conduit 524. Dielectric fluid may be circulated through the fixture 100 during the EDM process so that waste material is removed. The fluid pumping unit 520 may be configured to recirculate fluid, so that fluid drained from the fixture 100 is later resupplied to the fixture 100. The fluid pumping unit 520 may be configured to remove waste material from recirculated fluid. The fluid pumping unit 520 may have, for example, a filter and/or magnet for removing material from the fluid.

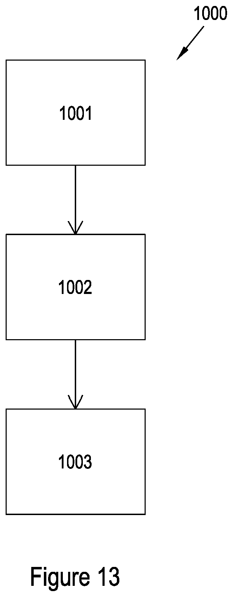

Referring to Figure 13, a flow diagram for a method 1000 of removing a fastener using EDM is shown.

The method 1000 comprises the step of receiving 1001 a portion of the fastener with a recess of an EDM fixture. This may comprise receiving the head of the fastener within the fixture.

The user of an EDM tool may have to move the tool laterally relative to the fastener so that the fastener can be received by the recess. The user may have to move or rotate the tool so that the opening of the fastener is aligned/orientated to the fastener.

The method 1000 further comprises contacting 1002 the portion of the fastener with the EDM fixture. This may comprise a sidewall surface of the recess contacting a sidewall of the head of the fastener.

Contacting 1002 the fastener with the fixture may ensure that the EDM fixture/tool are centrally located relative to the fixture. This may ensure that the EDM electrode of the EDM is aligned with the fastener, such that centre of the fastener is eroded, with the result that the shank is weakened to breaking point or severed by advancement of the EDM electrode. The contact also ensures that an electrical connection is established between the fastener and fixture. This may allow the fastener to be grounded such that the fastener acts as the grounding electrode for EDM process.

The method 1000 further comprises eroding 1003 the fastener using the EDM electrode. This step may comprise supplying an EDM current to the EDM electrode. The EDM current creates a high voltage between the EDM electrode and the head of the fastener (grounding electrode). The high voltage creates an electrical arc across the electrode gap, thereby eroding the fastener. The fixture is filled with dielectric fluid prior to the EDM current being supplied. The EDM current may be pulsed so that the electrical arc is produced for only short durations, with rest periods between each pulse.

Prior to eroding 1003 the fastener, the tip of the EDM electrode may be brought into close proximity to the fastener. The EDM electrode may be at a fixed location in the tool, such that the tip of the electrode is in close proximity to the fastener once the fastener is received by the fixture. Alternatively, the EDM electrode may be movable between a retracted and working position. The EDM electrode may be moved from the retracted position to the working position after the fastener is received, such that the tip of the electrode is in close proximity to the fastener.

The EDM electrode position may also be adjusted as the fastener is eroded. As described above, the EDM electrode may be moved towards the fastener as erosion occurs to maintain an appropriate spark gap (e.g. based on sensing current and/or voltage during machining).

The method 1000 may further comprise, as a first step, selecting a fixture that corresponds to a particular fastener. An EDM apparatus may comprise a plurality of fixtures, wherein each fixture comprises a different opening configured to receive a different fastener. The user may select an appropriate fixture for whichever fastener is encountered, and removably attach said fastener to the EDM tool.

The method 1000 may further comprise supplying dielectric fluid to the fixture and draining the dielectric fluid from the fixture during the EDM process. Dielectric fluid must be provided between the machine electrode and fastener while the EDM current is supplied, but this dielectric fluid may be continually flushed, thereby removing waste material produced by the EDM.

The method 1000 may further comprise recirculating dielectric fluid through the fixture. I.e. fluid that has been drained from the fixture may be supplied back into the fixture. Recirculated fluid may be processed so that waste material is removed from the fluid before being recirculated.

Although specific examples have been described, the skilled person will appreciate that variations are possible, within the scope of the invention, which should be determined with reference to the accompanying claims.

## Claims

1. A method for removing a fastener having a longitudinal shank from a workpiece using electro-discharge machining, EDM, the method comprising:
contacting a portion of the fastener or workpiece with an EDM fixture, thereby:
locating the EDM fixture and an EDM electrode relative to the fastener in a lateral direction; and
establishing an electrical ground connection to the fastener via the EDM fixture; and
eroding the fastener using the EDM electrode.

2. The method of claim 1, further comprising
receiving the portion of the fastener within a recess of the EDM fixture.

3. The method of claim 1, wherein the portion of the workpiece that is contacted by the EDM fixture comprises a sidewall of a hole that receives the fastener.

4. The method of claim 2, wherein contacting the portion of the fastener with the EDM electrode comprises contacting a longitudinal sidewall of the fastener with a surface of the recess; wherein the surface of the recess is optionally a longitudinal sidewall of the recess.

5. The method of any of claim 2, or claim 4, or claim 5, further comprising:
establishing a workpiece seal between an end of the EDM fixture and the workpiece so that the recess and the workpiece together define a cavity; and optionally further comprising establishing an EDM electrode seal between the EDM electrode and the EDM fixture and/or circulating a dielectric fluid through the cavity through a fluid channel defined by the EDM fixture.

6. The method of any preceding claim, wherein a fluid channel for circulating a dielectric fluid comprises at least one opening in a longitudinal sidewall of the recess.

7. The method of any preceding claim, wherein the step of eroding the fastener is undertaken with the EDM electrode accessing the workpiece through an opening in the EDM fixture and/or wherein the portion of the fastener is on a first side of the workpiece, and the step of eroding the fastener comprises eroding the fastener from a second, opposite, side of the workpiece.

8. An electro-discharge machining, EDM, tool for removing fasteners having a longitudinal shank from a workpiece, the EDM tool comprising:
an EDM electrode for eroding the fastener;
an EDM fixture configured to locate the EDM tool and the EDM electrode relative to the fastener in a lateral direction and to establish an electrical ground connection with the fastener.

9. The EDM tool of claim 8, wherein the EDM fixture comprises a recess for receiving a portion of the fastener and is configured to establish a ground connection with the fastener by direct contact therewith;
wherein the recess of the EDM fixture optionally comprises a surface configured to make contact with a longitudinal sidewall of the fastener and/or wherein the EDM fixture further comprises an opening configured to receive the EDM electrode so that the EDM electrode can erode the fastener.

10. The EDM tool of claim 8, wherein the EDM electrode is configured to erode the fastener from a first side of the workpiece, and the EDM fixture is configured to locate the EDM tool and the EDM electrode and make ground electrical contact with the fastener by contact with the workpiece or the fastener from a second side of the workpiece, opposite to the first side.

11. The EDM tool of claim 9, wherein the EDM fixture comprises a workpiece seal, configured to seal against the workpiece so that the recess and the workpiece together define a cavity; and wherein the EDM fixture optionally comprises a groove around a perimeter of the recess, the workpiece seal disposed in the groove; and wherein EDM fixture optionally comprises a fluid channel configured to communicate with the cavity for dielectric fluid circulation.

12. The EDM tool of any of claims 8 to 11, wherein the EDM fixture comprises an electrically conducting body.

13. The EDM tool of any of claims 8 to 12, further comprising a power supply, configured to provide an electrical current to the EDM electrode and a fluid circulation unit, configured to circulate a dielectric fluid through the EDM tool, in use.

14. A system, comprising the EDM tool of any of claims 8 to 13, wherein the EDM fixture is one of a set of EDM fixtures, each EDM fixture configured with a recess configured to correspond with a different shaped and/or sized fastener head.

15. An EDM fixture comprising a recess for receiving a portion of a fastener,
wherein the recess is configured to locate the EDM fixture and an EDM electrode of an EDM tool relative to the fastener in a lateral direction and to establish an electrical ground connection with the fastener.
